(19) **Europäisches Patentamt**
**European Patent Office**
**Office européen des brevets**

(11) **EP 1 833 211 B1**

(12) **EUROPEAN PATENT SPECIFICATION**

(45) Date of publication and mention
of the grant of the patent:
**13.08.2014 Bulletin 2014/33**

(51) Int Cl.:
***H04L 12/825*** (2013.01)

(21) Application number: **07102805.4**

(22) Date of filing: **21.02.2007**

(54) **Method and system for controlling data transfer rate**

Verfahren und System zur Steuerung der Datentransferrate

Procédé et système de contrôle du taux de transfert de données

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.02.2006 CN 200610024031**
**27.02.2006 CN 200610024172**

(43) Date of publication of application:
**12.09.2007 Bulletin 2007/37**

(73) Proprietor: **Huawei Technologies Co., Ltd.**
**Shenzhen, Guangdong Province 518129 (CN)**

(72) Inventors:
• **Huang, Kaitao**
**Huawei Administration Building**
**Shenzhen, Guangdong Province 518129 (CN)**

• **Li, Jia**
**Huawei Administration Building**
**Shenzhen, Guangdong Province 518129 (CN)**
• **Xiong, Hua**
**Huawei Administration Building**
**Shenzhen, Guangdong Province 518129 (CN)**

(74) Representative: **Thun, Clemens et al**
**Mitscherlich PartmbB**
**Patent- und Rechtsanwälte**
**Sonnenstraße 33**
**80331 München (DE)**

(56) References cited:
**EP-A- 1 289 179      US-A1- 2003 043 777**
**US-A1- 2005 073 989**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present application claims the priorities of Chinese Patent Application No. 200610024031.6 and No. 200610024172.8, titled "Method For Controlling Packet Data Transfer Rate In Mobile Communication Networks And System Thereof" and "Method For Controlling HSDPA Data Transfer Rate And System Thereof", and filed on Feb. 21, 2006 and Feb. 27, 2006, respectively, the whole contents of which are incorporated herein by reference.

## Field of the Invention

The present invention relates to mobile communication technology, in particular, to a method and system for controlling data transfer rate.

## Background of the invention

Since 1980s, cellular mobile communication has been in a tendency of rapid development, for it can meet the requirements on communications in people's work and life in the modern society due to its characteristics of convenience and flexibility. At present, WCDMA (Wideband Code Division Multiple Access) is one of the three main 3G (The Third Generation) Access method. Wherein, High Speed Downlink Packet Access (HSDPA) and High Speed Uplink Packet Access (HSUPA) are two important evolutions of 3G technologies. The scheduling and retransmission of data packets in HSDPA and HSUPA is controlled by base station node (Node B).

HSDPA, as a downlink high speed data packet access technology, was introduced into Release 5 (R5) of 3rd Generation Partnership Project (3GPP) in 2002. HSDPA employs a shorter Transmission Timing Interval (TTI) of 2ms, so that rapid adaptive control can be realized. Adaptive Modulation and Coding (AMC) and Hybrid Auto Repeat reQuest (HARQ) are used in the Physical Layer.

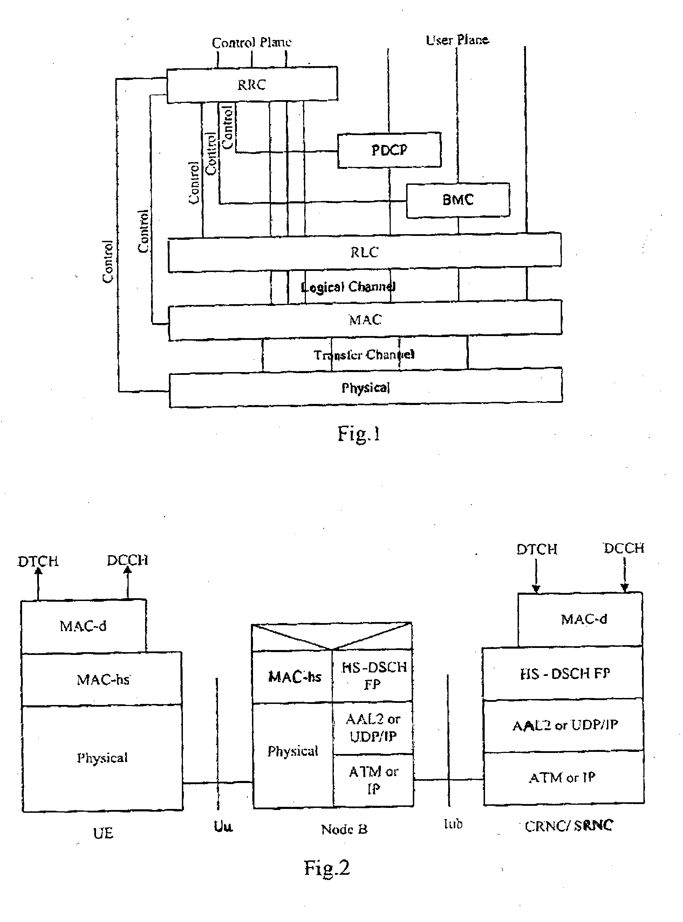

3G Air Interface technologies, represented by WCDMA, have been widely employed. Fig.1 shows HSDPA-related protocols in radio air interface (Uu interface). From the control plane, a Uu interface can be divided into three protocol layers: Physical Layer (L1), Data Link Layer (L2) and Network Layer (L3). Wherein, L2 can be further divided into the following sub-layers: Medium Access Control (MAC), Radio Link Controller (RLC), Packet Data Convergence Protocol (PDCP) and Broadcast/Multicast Control (BMC) and so on; the corresponding Radio Resource Control (RRC) layer is L3.

The Physical Layer provides service to the MAC Layer via transfer channel, the characteristics of transfer channel are determined by the types and characteristics of the transferred data; the MAC Layer provides service to the RLC Layer via logical channel, the characteristics of logical channel are also determined by the types of the transferred data; and the RRC Layer transfers signalings using the service provided by the RLC Layer.

The MAC layer mainly makes the mapping from logical channel to transfer channel during data transferring, and makes the reconfiguration and test of part of the radio resources in the instructions of control plane. The MAC Layer protocol can be divided into Media Access Control Common (MACC) and Media Access Control Dedicate (MAC-d). A cell has an MACC instance; and a UE has an MAC-d instance.

The MAC Layer comprises three logical entities: MAC-b entity, i.e., a medium access control entity for processing Broadcast Channels (BCHs); MAC-c/sh entity, i.e., a medium access control entity for processing Paging Channels (PCHs), Forward Access Channels (FACHs) and Random Access Channels (RACHs); and MAC-d entity. One MAC-b entity is set respectively in each UE and each cell on the network side, such as Node B; one MAC-c/sh entity is set in each UE using shared channel, and one MAC-c/sh entity is set in each cell on the network side, located in a Controlling Radio Network Controller (CRNC); and one MAC-d entity is set in each UE.

A High Speed DSCH (HS-DSCH) was added in the HSDPA, in order to support the Physical Layer process of HSDPA, an MAG-hs was added in both the UE and the MAC Layer on the network side, such as Node B, so that the actions, i.e., the scheduling of HARQ, AMC and HS-DSCH, and flow control, etc, can be processed.

Fig.2 shows the framework of Uu interface protocol and Iub interface protocol after HSDPA technology is introduced. The flow control of the MAC-hs entity in Node B is for the user plane of HSDPA, and each priority queue in the MAC-d is controlled independently, so that data delay can be reduced, and data loss due to absence capacity of the Uu interface can be avoided; at the same time, data cached in RNC should be transferred to Node B as early as possible in the condition that the cache block of Node B is not exceeded.

The RLC is mainly used for segmentation and reassembly, concatenation, filling, user data transfer, in-sequence high layer data delivery, copy detection, flow control, protocol error detection and restoration, encryption and so on. Three data transfer modes are used when implementing the above functions: Acknowledged Mode (AM), Unacknowledged Mode (UM) and Transparent Mode (TM). Wherein, data transfer in AM is highest reliable, and a sliding window mechanism is provided to ensure the error-free sending of data.

In AM, Protocol Data Units (PDUs) includes: Acknowledged Mode Data (AMD) PDU and Control PDU. The former is used for transferring data, and the latter is used for transferring control and status information. Each AMD PDU carries a Sequence Number (SN), the SN increase and cycle between 0 and 5095. STATUS PDU is one of the Control PDUs, for transferring status information between the sending and receiving party. One or more STATUS PDUs are referred to as STATUS REPORT.

In the sliding window mechanism for RLC data transfer in AM, the size of the sending window and the receiving window are both configurable. Wherein, the receiving party maintains status variables VR(R) and VR(H); the former refers to the SN of the next AMD PDU to be received, and the latter refers to the maximum SN of the AMD PDUs received plus 1. If the VR(R) and VR(H) are not equal to each other, then it means that loss of AMD PDUs exists.

To ensure the reliability of data transfer, Automatic Repeat Request (ARQ) mechanism is employed in AM. In the RLC protocol of 3GPP, the ARQ mechanism is realized as follows: first, a sending party sends data to a receiving party; then, the receiving party determines whether loss of data exists according to VR(R) and VR(H), if the loss of data exists, then STATUS REPORT is sent and the sending party is required to retransmit the loss data; and the sending party retransmits the data according to the indication of STATUS REPORT

To increase the downlink bandwidth utilization of a WCDMA system, a bandwidth allocation solution of "OVERBOOK" is usually employed, that is, when a user is admitted, transmission resources are not allocated according to peak rate requirements of users, instead, transmission resources are allocated according to a certain activation ratio.

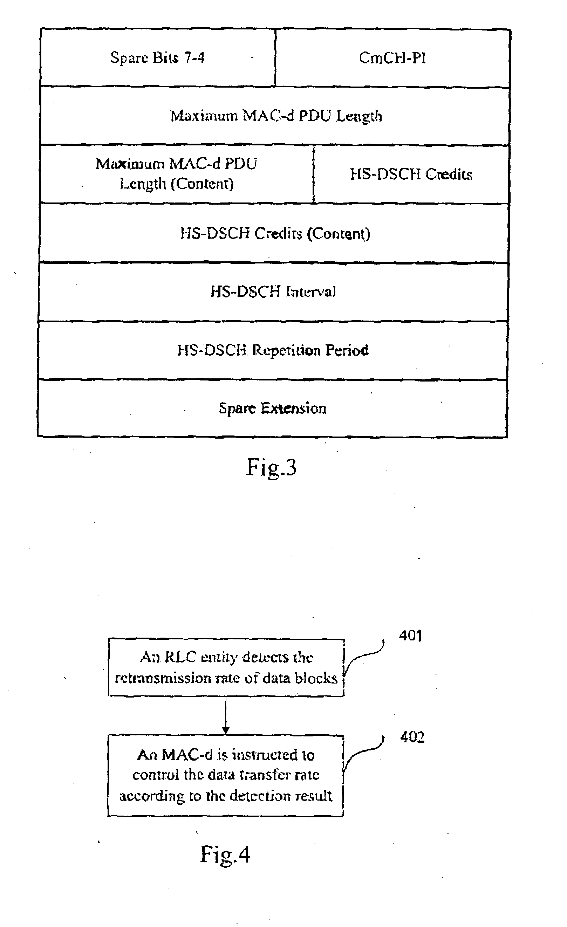

When HSDPA technology is introduced, after an RNC MAC-d entity receives a Capacity Allocation message from Node B, by controlling the data volume delivered, the data flow of an MAC-d entity of corresponding priority is ensured not to exceed the capacity allocated by Node B. As shown in Fig.3, parameters specified in the Capacity Allocation message sent to RNC by Node B include: Queue Priority (CmCH-PI), Maximum MAC-d PDU Length, HS-DSCH Credits, HS-DSCH Interval, HS-DSCH Repetition Period (Repetition Period). It means that for an MAC-d data stream of which the Queue Priority is "CmCH-PI", in a period with a length of "HS-DSCH Interval", a maximum number of "HS-DSCH Credit" of data frames having a maximum PDU size of "Maximum MAC-d PDU Length" can be sent by RNC, and the period of "HS-DSCH Interval" can be repeated for a maximum number of "HS-DSCH Repetition Period".

In practical use, the above solution has the following problems: the bandwidth utilization of the transport layer and the rate of the application layer are both low in case of congestion.

The main reason lies in that: if too many users access the system and congestion occurs in the transport layer as a result, then the actual bandwidth of lub transfer will not meet the peak rate of all users. It is verified by practice that if no flow control processing is performed when mass data concur in such a case, the bandwidth utilization of lub transfer will be very low, approximately 20% of the actual bandwidth, and the quality of service for users will be degraded drastically.

For users of HSDPA, the data capacity of an MAC-d entity can be well controlled by the data capacity control function of an MAC-hs entity, so that Uu interface congestion can be avoided effectively; however, the problem of lowered transmission resource utilization caused by lub interface congestion cannot be solved.

In U.S. Patent Application No. US2005/073989 A1, a method of reducing signaling passing an lub interface is provided and thereby performance of a radio link is controlled. In U.S. Patent Application No. US2003/043777 A1, a method and system for accelerating Internet data transmissions via a wireless network is provided.

## Summary of the Invention

The technical problem to be solved by the invention is to provide a method for controlling data transfer rate and a system thereof, so that the problem in the prior art can be solved that the transmission resource utilization and the rate of the application layer are lowered due to lub congestion.

To solve the above technical problem, the invention provides a method for controlling HSDPA data transfer rate, which comprises the following steps:

detecting a retransmission rate of data blocks by an Radio Link Controller (RLC) entity;

outputting the detected retransmission rate of data blocks;

instructing an Media Access Control Dedicate (MAC-d) to control the data transfer rate according to the detected retransmission rate;

wherein if the retransmission rate detected is greater than a preset upper threshold of the retransmission rate, the Radio Link Controller entity instructs the Media Access Control Dedicate to decrease maximum number of data blocks, which are allowed to be sent in a next scheduling period of a High Speed Downlink Packet Access (HSDPA) service, or the Radio Link Controller entity instructs the Media Access Control Dedicate to limit the use of a transmission format, which has the maximum rate in a nonzero-rate transmission format set which is schedulable currently;

if the retransmission rate detected is less than a preset lower threshold of the retransmission rate, the Radio Link Controller entity instructs the Media Access Control Dedicate to increase the maximum number of data blocks, which are allowed to be sent in the next scheduling period of a High Speed Downlink Packet Access service, or the Radio Link Controller entity instructs the Media Access Control Dedicate to restore the use of a transmission format, which has the minimum rate in the limited transmission formats.

In addition, the invention further provides a system for controlling data transfer rate, which comprises:

a Radio Link Controller entity, for detecting a retransmission rate of data blocks and outputting the detected retransmission rate;

a Media Access Control Dedicate ;and

a control device, for instructing the Media Access Control Dedicate to control the data transfer rate according to the detected retransmission rate;

wherein

the Radio Link Controller entity comprises: a detecting means, for detecting the retransmission rate of data blocks; and a comparing means, for comparing the retransmission rate detected with a preset retransmission rate threshold, or comparing the time, in which the retransmission rate is consecutively greater than the upper threshold of the retransmission rate, with the upper threshold trigger time, and outputting a comparing result, wherein the comparison means is connected with the detecting means;

the control device comprises: a first control means, for issuing instructions to change the maximum number of data blocks, which are allowed to be sent in the next scheduling period of the High Speed Downlink Packet Access service by the Media Access Control Dedicate, according to the comparison result; and an adjusting means for adjusting the maximum number of data blocks; or the control device comprises: a second control means, for issuing instructions to limit or restore the use of a transmission format, which has the maximum rate in the schedulable nonzero-rate transmission format set of the current Media Access Control Dedicate, according to the comparison result from the comparing means; and a transmission format adjusting means, for limiting the use of a transmission format, which has the maximum rate in a nonzero-rate transmission format set which is schedulable currently in the Media Access Control Dedicate, or for restoring the use of a transmission format, which has the minimum rate in the limited transmission formats in the Media Access Control Dedicate, according to instructions from the second control means.

It can be seen from the above disclosed technical solutions that in the embodiments of the invention, the retransmission rate of data blocks is detected by an RLC entity, so that the congestion state of a link can be traced; and the MAC-d is instructed to correspondingly control the data transfer rate according to the detected retransmission rate, so that the transport layer bandwidth of the lub interface can vary adaptively, and the problem can be effectively solved that the rate of the application layer is lowered drastically due to congestion. As a result, the bandwidth utilization of the transport layer can be increased to the maximum extent in case of congestion.

## Brief Description of the Drawings

Fig.1 is a schematic diagram showing the overall structure of Radio Interface Protocol in the prior art;
Fig.2 is a schematic diagram showing the framework of HSDPA protocol in the prior art;
Fig.3 is a schematic diagram showing the data frame structure of base station Capacity Allocation in the prior art;
Fig.4 is a schematic flow chart of the method for controlling data transfer rate according to one embodiment of the invention;
Fig.5 is a schematic flow chart of the first embodiment of the control method shown in Fig.4;
Fig.6 is a schematic flow chart of the second embodiment of the control method shown in Fig.4;
Fig.7 is a schematic diagram showing the transfer mode of data blocks carried in an RLC in AM; and
Fig.8 is a schematic diagram showing the structure of the system for controlling data transfer rate according to an embodiment of the invention.

## Detailed Description of the Embodiments

The invention will now be further described in detail in conjunction with the drawings and embodiments.
Referring to Fig.4, which is a schematic flow chart of the method for controlling data transfer rate according to one embodiment of the invention, comprising the following steps:
Step 401: an RLC entity detects the retransmission rate of data blocks;
Step 402: an MAC-d is instructed to control the data transfer rate according to the detection result.
In detail, if the retransmission rate is greater than a preset upper threshold of the retransmission rate, the RLC entity can instruct the MAC-d to decrease the maximum number of data blocks allowed to be sent in the next scheduling period, or to limit the use of a transmission format with the maximum rate in a nonzero-rate transmission format set which is schedulable currently, so that the data transfer rate can be controlled; otherwise, if the retransmission rate detected is less than a preset lower threshold of the retransmission rate, then the RLC entity can instruct the MAC-d to increase the maximum number of data blocks allowed to be sent in the next scheduling period, or to restore the use of a transmission format with the minimum rate in the limited transmission formats, so that the data transfer rate can be controlled.
In the embodiments of the invention, it is traced whether congestion occurs in the current link mainly by detecting the retransmission rate of the Radio Link Control (RLC) Layer in Acknowledged Mode (AM) in real time via an Radio Network Controller (RNC). If the retransmission rate is too high, then transmission formats with larger rates or the maximum number of data blocks allowed to be sent will be limited during the scheduling via a Media Access Control Dedicate (MAC-d), and the con-

gestion of Iub interface will be released by lowering the throughput of the MAC-d; if the retransmission rate of the RLC in AM restores to normal, then it's tried to schedule transmission formats with larger rates or restore the maximum number of data blocks allowed to be sent; if the retransmission rate of the RLC is still very high when only one of the currently schedulable nonzero Transport Formats (TFs) of the MAC-d is left, then the rate of the application layer will be limited by adjusting the sending window of the RLC Layer, and the sending window will be restored gradually after the retransmission rate restores to normal. That is, the retransmission rate of the RLC in AM will be controlled in a reasonable range all the time in the premise that the requirements on capacity of the NodeB MAC-hs capacity control for processing HS-DSCH are ensured. Therefore, the problem that the rate of the user application layer of High Speed Downlink Packet Access (HSDPA) is lowered drastically due to Iub interface congestion will be effectively solved by using the solution according to the embodiments of the invention, so that in HSDPA service, the bandwidth utilization of the transport layer of the Iub interface will be increased in case of congestion.

In order to be better understood by those skilled in the art, the methods for controlling data transfer rate will now be illustrated respectively.

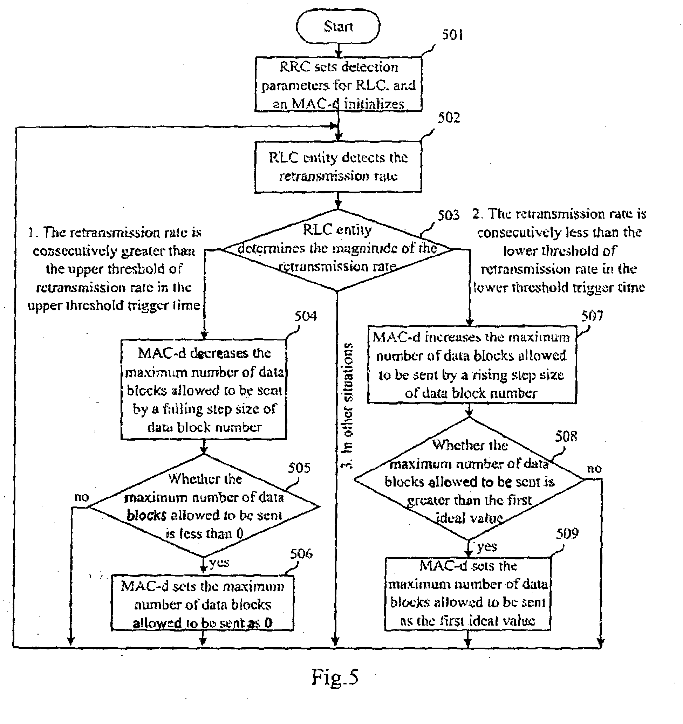

Referring to Fig.5, which is a schematic flow chart of the first embodiment of the control method shown in Fig.4.

In Step 501, a Radio Resources Control (RRC) Layer sets detection parameters for an RLC entity and sets up the entity (i.e., the RLC entity), and an MAC-d initializes the maximum number of data blocks allowed to be sent in a scheduling period of HSDPA service to an ideal value. The ideal value is the maximum number of data blocks that can be sent in a Transmission Timing Interval (TTI), which is determined according to the Capacity Allocation of a Node B. Wherein, the detection parameters include, but not limited to, the following parameters:

initiation delay time of retransmission rate detection (Pa), retransmission rate detection period (Ps), upper threshold trigger time (Ptt1), delay time after upper threshold event is triggered (Pb), lower threshold trigger time (Ptt2), delay time after lower threshold event is triggered (Pc), falling step size of data block number (Pd), rising step size of data block number (Pu), and upper threshold of retransmission rate (Pth1) as well as lower threshold of retransmission rate (Pth2).

In Step 502, when the RLC entity is set up, the RLC entity starts to periodically detect the retransmission rate of data blocks after an initiation delay time Pa, and its detecting period is Ps. The congestion status of a link may be traced rapidly by detecting the retransmission rate of data blocks via an RLC entity.

In Step 503, the RLC entity determines the magnitude of the retransmission rate, if Condition 1 is met, i.e., the time in which the retransmission rate detected is consecutively greater than the upper threshold of retransmission rate Pth1 exceeds a preset upper threshold trigger time Ptt1, then it is referred to as an upper threshold event, and turn to Step 504; if Condition 2 is met, i.e., the time in which the retransmission rate detected is consecutively less than the lower threshold of retransmission rate Pth2 exceeds a preset lower threshold trigger time Ptt2, then it is referred to as a lower threshold event, and turn to Step 507; if neither Condition 1 nor Condition 2 is met, that is, Condition 3 is met, then return to Step 502 and redetect the retransmission rate.

In Step 504, the RLC entity instructs the MAC-d to decrease the maximum number of data blocks allowed to be sent in the next scheduling period of HSDPA service by a falling step size of data block number Pd.

In Step 505, the MAC-d determines whether the maximum number of data blocks allowed to be sent after decrease is less than 0, if yes, then turn to Step 506; otherwise, return to Step 502 after a delay time Pb.

In Step 506, since the range of the maximum number of data blocks allowed to be sent in a scheduling period of HSDPA service by the MAC-d should be greater than or equal to zero and less than or equal to a first ideal value, the MAC-d directly sets the maximum number of data blocks allowed to be sent in the next scheduling period of HSDPA service as 0, and also return to Step 502 after a delay time Pb.

In Step 507, the RLC entity instructs the MAC-d to increase the maximum number of data blocks allowed to be sent in the next scheduling period of HSDPA service by a rising step size of data block number Pu.

In Step 508, the MAC-d determines whether the maximum number of data blocks allowed to be sent after increase is greater than a first ideal value, if yes, then turn to Step 509; otherwise, also return to Step 502 after a delay time Pc.

In Step 509, since the range of the maximum number of data blocks allowed to be sent in a scheduling period of HSDPA service by the MAC-d should be also greater than or equal to zero and less than or equal to the first ideal value, the MAC-d directly sets the maximum number of data blocks allowed to be sent in the next scheduling period of HSDPA service as the first ideal value, and return to Step 502 after a delay time Pc.

By adjusting the maximum number of data blocks allowed to be sent in an MAC-d scheduling period according to the variation in the retransmission rate, the bandwidth of the transport layer of the Iub interface can vary adaptively, and the problem that the rate of the application layer is lowered drastically due to congestion can be effectively solved, and the bandwidth utilization of the transport layer can be increased to the maximum extent in case of congestion. Generally, the bandwidth utilization of the transport layer of the Iub interface can be increased by more than 3 times in case of congestion.

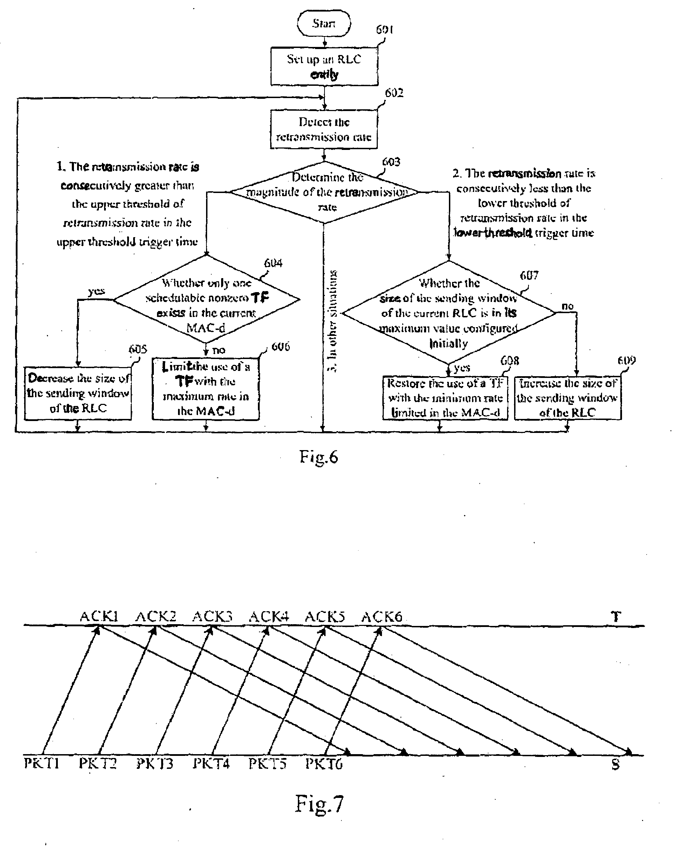

Correspondingly, also refer to Fig.6, which is a schematic flow chart of the second embodiment of the control method shown in Fig. 4.

In Step 601, an RRC Layer sets detection parameters for an RLC and sets up the entity. Wherein, the detection parameters include, but not limited to, the following parameters: initiation delay time (Pa), retransmission rate detection period (Ps), upper threshold trigger time (Ptt1), delay time after upper threshold event is triggered (Pb), lower threshold trigger time (Ptt2), delay time after lower threshold event is triggered (Pc) and response loop back delay (Pr), as well as upper threshold of retransmission rate (Pth1) and lower threshold of retransmission rate (Pth2). Wherein, Pr is the interval $T_{Ack}$ between the response frame and the send frame configured at L3.

In Step 602, when the RLC entity is set up, the RLC entity starts to periodically detect the retransmission rate of data blocks after a delay Pa, and its detecting period is Ps. The congestion status of a link can be traced rapidly by detecting the retransmission rate of data blocks via an RLC entity.

In Step 603, the RLC entity determines the magnitude of the retransmission rate, if Condition 1 is met, i.e., the time in which the retransmission rate detected is consecutively greater than the upper threshold of retransmission rate exceeds a preset upper threshold trigger time, then it is referred to as an upper threshold event, and turn to Step 604; if Condition 2 is met, i.e., the time in which the retransmission rate detected is consecutively less than the lower threshold of retransmission rate exceeds a preset lower threshold trigger time, then it is referred to as a lower threshold event, and turn to Step 607; if neither Condition 1 nor Condition 2 is met, that is, Condition 3 is met, then turn to Step 602 and keep the TFs (Transport Formats) in the TF set of the current MAC-d, and redetect the retransmission rate.

In Step 604, the RLC entity determines whether only one schedulable nonzero TF exists in the currently schedulable nonzero rate TF set of the MAC-d, if yes, then turn to Step 605; otherwise, turn to Step 606.

In Step 605, the RLC entity decreases the size of its current sending window, and return to Step 602 after a delay time after the upper threshold event is triggered. Wherein, the size of the current sending window of the RLC is decreased according to the following sequence, or the size of the sending window is restored according to its inverted sequence, that is: the maximum value configured initially, $W_{ideal}$, $W_{ideal}/2$, $W_{ideal}/4$, $W_{ideal}/8$, ..., 1- The second ideal value is the number of data blocks transferred in the response loopback delay.

In Step 606, the RLC entity limits the use of a TF with the maximum rate in the currently schedulable nonzero rate TF set of the MAC-d, and also return to Step 602 after a delay time after the upper threshold event is triggered.

In this embodiment, the control granularity is refined by decreasing the size of the sending window together with limiting the TFs in the MAC-d via an RLC entity, and the problem that the rate of the application layer is lowered drastically due to congestion can be effectively solved, so that the bandwidth utilization of the transport layer can be increased to the maximum extent in case of congestion. Generally, the bandwidth utilization of the transport layer can be increased from the existing 20% to about 90% in case of congestion.

In Step 607, the RLC entity determines whether the size of its current sending window is less than its maximum value configured initially, if yes, then turn to Step 608; otherwise, turn to Step 609.

In Step 608, the RLC entity restores the use of a TF with the minimum rate in the limited TFs of the MAC-d, and return to Step 602 after a delay time after the lower threshold event is triggered.

In Step 609, the RLC entity increases the size of its current sending window, and also return to Step 602 after a delay time after the upper threshold event is triggered. Wherein, the size of the sending window of the RLC is increased according to the inverted sequence of the following sequence: the maximum value configured initially, $W_{ideal}$, $W_{ideal}/2$, $W_{ideal}/4$, $W_{ideal}/8$, ..., 1.

Thus, it can be seen that in this embodiment, a Packet Switching (PS) data service borne by an RLC in AM is employed, and the current link status is traced by detecting the retransmission rate of the RLC in AM in real time. Once the retransmission rate is found to be too high, it indicates that link congestion occurs, thus Transmission Formats (TFs) with larger rates are limited during the scheduling of the MAC-d, and link congestion is lightened by lowering the throughput of the MAC-d.

Additionally, in the invention, based on the above embodiments, it can be ensured that in AM the retransmission rate of an RLC is controlled to be kept in a reasonable range all the time by TF adjustment, together with RLC sending window adjustment. That is, if the retransmission rate of the RLC is still very high when only one of the currently schedulable nonzero rate TFs of the MAC-d is left, then the rate of the application layer is limited by decreasing the size of the sending window of the RLC. When the retransmission rate of the RLC in AM restores to normal, the size of the sending window of the RLC will be restored gradually, and the scheduling of the TF with the minimum rate in the MAC-d will be restored.

In an ideal circumstance without retransmission, the size of the sending window of an RLC can be computed according to the TF, as shown in Fig.7. It is hypothesized that: the Transmission Timing Interval (TTI) in the current TF is $T_{tti}$; and the number of data blocks transferred in the time $T_{tti}$ is $N_{block}$; and the interval between the response frame and the send frame is $T_{Ack}$, i.e., the interval from the time when the transmitting end sends out a frame to the time when it receives the corresponding response, for example, the interval from the time when PKT1 is sent out to the time when ACK1 is received. Thus, in an ideal situation without retransmission, the ideal value ($W_{ideal}$) of the size of the sending window of an RLC is the number of data blocks transferred in $T_{Ack}$, the computing formula of which is:

$$W_{ideal} = \left\lceil \frac{T_{rlck} \times N_{block}}{T_{tti}} \right\rceil$$

In a practical system used, since RLC retransmission is inevitable, the size of the sending window of an RLC is set to be greater than $W_{ideal}$.

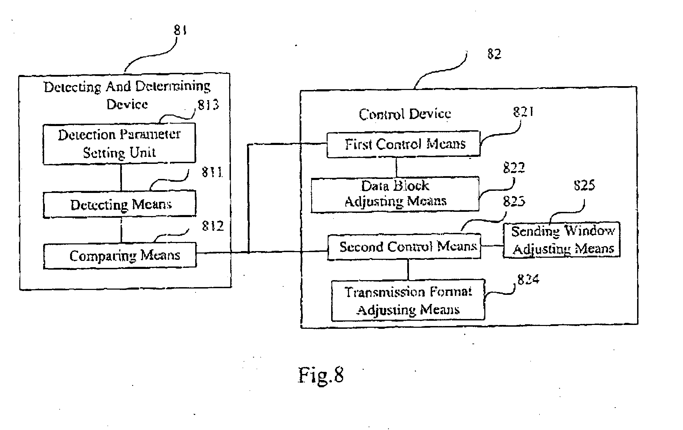

In addition, there is further provided a system for controlling data transfer rate. The structural representation of one embodiment of the system is shown in Fig.8, in which the system comprises: a detecting and determining device 81 and a control device 82. Wherein, the detecting and determining device 81 is used for an RLC entity to detect and determine the retransmission rate of data blocks; and the control device 82 is used for instructing the MAC-d to control the data transfer rate according to the detection and determination result.

The detecting and determining device comprises: a detecting means 811, a comparing means 812 and/or a detection parameter setting unit 813. The detection parameter setting unit 813 is connected with the detecting means 811, for setting detection parameters of the RLC entity and setting up the entity. The detecting means 811 is used for an RLC entity to detect the retransmission rate of data blocks; and the comparing means 812 is connected with the detecting means 811, for comparing the retransmission rate obtained from the detection result with a preset retransmission rate threshold, or comparing the time in which the retransmission rate is consecutively greater than the upper threshold of the retransmission rate with the upper threshold trigger time. Wherein, the detection parameters include any one or more of the following:

initiation delay time of retransmission rate detection, retransmission rate detection period, upper threshold trigger time, delay time after the upper threshold event is triggered, lower threshold trigger time, delay time after the lower threshold event is triggered, falling step size of data block number, rising step size of data block number, and the upper threshold of the retransmission rate, the lower threshold of retransmission rate, as well as response loopback delay,

The control device 82 comprises: a first control means 821, a data block adjusting means 822 and/or a second control means 823, and a transmission format adjusting means 824. The first control means 821 is used for issuing instructions to decrease or increase the maximum number of data blocks allowed to be sent in the next scheduling period of the HSDPA service by the MAC-d, according to the comparison result from the comparing means 812; the data block adjusting means 822 is used for adjusting the maximum number of data blocks allowed to be sent in the next scheduling period of the HSDPA service by the MAC-d, according to the instructions of the first control means 821; the second control means 823 is used for issuing instructions to limit or restore the use of a transmission format with the maximum rate in the currently schedulable nonzero-rate transmission format set of the MAC-d, according to the comparison result from the comparing means 812; and the transmission format adjusting means 824 is used for limiting the use of a transmission format with the maximum rate in a nonzero-rate transmission format set which is schedulable currently, or for restoring the use of a transmission format with the minimum rate in the limited transmission formats of the MAC-d, according to the instructions from the second control means 823.

In addition, the control device can also comprise a sending window adjusting means 825, which is connected with the second control means 823, for adjusting the size of the sending window of the RLC entity; its adjusting process is as follows:

When the retransmission rate is greater than the upper threshold of the retransmission rate, if currently the transmission format set of the MAC-d contains two or more nonzero rate transmission formats, then the second control means 823 instructs the transmission format adjusting means 824 to limit the use of a transmission format with the maximum rate in the currently schedulable nonzero-rate transmission format set of the MAC-d; otherwise, it instructs the sending window adjusting means 825 to decrease the size of the sending window of the RLC entity;

When the retransmission rate is less than the lower threshold of retransmission rate, if the size of the current sending window of the RLC entity is not the maximum value configured initially, then the second control means 823 instructs the sending window adjusting means 824 to increase the size of the sending window of the RLC entity; otherwise, it instructs the transmission format adjusting means 825 to restore the use of a transmission format with the minimum rate in the limited transmission formats of the MAC-d.

In addition, in order to increase the accuracy of the tracing on congestion status, the execution condition of the first control means can also be set as: after the time in which the retransmission rate detected is consecutively greater than the upper threshold of retransmission rate exceeds the upper threshold trigger time, the first control means 821 instructs the data block adjusting means 822 to decrease the maximum number of data blocks allowed to be sent in the next scheduling period of HSDPA service; after the time in which the retransmission rate detected is consecutively less than the lower threshold of retransmission rate exceeds the lower threshold trigger time, the first control means 821 instructs the data block adjusting means 822 to increase the maximum number of data blocks allowed to be sent in the next scheduling period of HSDPA service;

Or, the execution condition of the second control means is set as: after the time in which the retransmission rate detected is consecutively greater than the upper threshold of retransmission rate exceeds the upper threshold trigger time, the second control means 823 instructs the transmission format adjusting means 824 to limit the use of a transmission format with the maximum rate in a nonzero-rate transmission format set which is schedulable currently; after the time in which the retransmission rate detected is consecutively less than the lower threshold of retransmission rate exceeds the lower threshold trigger time, the second control means 823 instructs the transmission format adjusting means 824 to restore the use of a transmission format with the minimum rate in the limited transmission formats.

Thus, it can be seen that in the provided solution, the retransmission rate of data blocks is detected by an RLC entity, and the variation in the retransmission rate is obtained according to the detection result. On one hand, the maximum number of data blocks allowed to be sent in an MAC-d scheduling period can be adjusted according to the variation in the retransmission rate, so that the bandwidth of the transport layer of the lub interface can vary adaptively, and the problem that the rate of the application layer is lowered drastically due to congestion can be effectively solved, and the bandwidth utilization of the transport layer can be increased to the maximum extent in case of congestion; in general, the bandwidth utilization of the transport layer of the lub interface can be increased by more than 3 times in case of congestion. On the other hand, by decreasing the size of the sending window via the MAC-d, together with limiting the TFs in the MAC-d according to the variation in the retransmission rate, the control granularity can be refined, and the problem that the rate of the application layer is lowered drastically due to congestion can be effectively solved, so that the bandwidth utilization of the transport layer can be increased to the maximum extent in case of congestion; in general, the bandwidth utilization of the transport layer can be increased from the existing 20% to about 90% in case of congestion, without limitation.

The core concept of the invention lies in that: it is traced whether congestion occurs in the current link via a Radio Network Controller (RNC) by detecting the retransmission rate of a Radio Link Control (RLC) Layer in Acknowledged Mode (AM) in real time. If the retransmission rate is too high, then transmission formats with larger rates or the maximum number of data blocks allowed to be sent will be limited during the scheduling of a Media Access Control Dedicate (MAC-d), and the congestion of lub interface will be lightened by lowering the throughput of the MAC-d; if the retransmission rate of the RLC in AM restores to normal, then try to schedule transmission formats with larger rates or restore the maximum number of data blocks allowed to be sent; if the retransmission rate of the RLC is still very high when only one of the currently schedulable nonzero Transport Formats (TFs) of the MAC-d is left, then the rate of the application layer will be limited by adjusting the sending window of the RLC Layer, and the sending window will be restored gradually after the retransmission rate restores to normal. That is, the retransmission rate of the RLC in AM will be controlled to be kept in a reasonable range all the time in the premise that the requirements on capacity of the NodeB MAC-hs capacity control for processing HS-DSCH are ensured. Therefore, by employing the solutions of the invention, the problem that the rate of the user application layer of High Speed Downlink Packet Access (HSDPA) is lowered drastically due to lub interface congestion will be effectively solved, so that in HSDPA service, the bandwidth utilization of the transport layer of the lub interface will be increased in case of congestion.

Additional advantages and modifications will readily occur to those skilled in the art. Therefore, the invention in its broader aspects is not limited to the specific details and representative embodiments shown and described herein. Accordingly, various variations and modifications may be made without departing from the scope of the invention as defined by the appended claims.

**Claims**

1. A method for controlling data transfer rate, comprising:

   detecting a retransmission rate of data blocks by an Radio Link Controller (RLC) entity; outputting the detected retransmission rate; instructing an Media Access Control Dedicate (MAC-d) to control the data transfer rate according to the detected retransmission rate; wherein if the retransmission rate detected is greater than a preset upper threshold of the retransmission rate, the Radio Link Controller entity instructs the Media Access Control Dedicate to decrease maximum number of data blocks, which are allowed to be sent in a next scheduling period of a High Speed Downlink Packet Access (HSDPA) service, or the Radio Link Controller entity instructs the Media Access Control Dedicate to limit the use of a transmission format, which has the maximum rate in a nonzero-rate transmission format set which is schedulable currently; if the retransmission rate detected is less than a preset lower threshold of the retransmission rate, the Radio Link Controller entity instructs the Media Access Control Dedicate to increase the maximum number of data blocks, which are allowed to be sent in the next scheduling period of a High Speed Downlink Packet Access service, or the Radio Link Controller entity instructs the Media Access Control Dedicate to restore the use of a transmission format, which has the minimum rate in the limited transmission formats.

2. The method for controlling data transfer rate according to claim 1, further comprises the following procedure before performing the detecting step: the Media Access Control Dedicate initializes the maximum number of data blocks, which are allowed to be sent in a scheduling period of the High Speed Downlink Packet Access service, to a first ideal value, wherein the first ideal value is the maximum number of data blocks that are allowed to be sent in a Transmission Timing Interval (TTI) determined according to the Capacity Allocation of a Node B.

3. The method for controlling data transfer rate according to claim 2, further comprises the following step before performing the detecting step: set detection parameters for the Radio Link Controller entity and constitute the Radio Link Controller entity.

4. The method for controlling data transfer rate according to claim 3, wherein the detection parameters include any one or more of the following:

   initiation delay time of retransmission rate detection, retransmission rate detection period, upper threshold trigger time, delay time after the upper threshold event is triggered, lower threshold trigger time, delay time after the lower threshold event is triggered, falling step size of data block number, rising step size of data block number, and the upper threshold of the retransmission rate, the lower threshold of retransmission rate, as well as response loopback delay.

5. The method for controlling data transfer rate according to claim 1, wherein the method of decreasing or increasing the maximum number includes :

   decrease the maximum number of data blocks, which are allowed to be sent in the next scheduling period of the High Speed Downlink Packet Access service, by the falling step size of data block number; or
   increase the maximum number of data blocks, which are allowed to be sent in the next scheduling period of the High Speed Downlink Packet Access service, by the rising step size of data block number.

6. The method for controlling data transfer rate according to claim 2, wherein the maximum number of data blocks, which are allowed to be sent in the scheduling period of the High Speed Downlink Packet Access service by the Media Access Control Dedicate, is greater than or equal to zero, and is less than or equal to the first ideal value;
   if the maximum number of data blocks allowed to be sent after decrease is less than zero, set the maximum number as zero;
   if the maximum number of data blocks allowed to be sent after increase is greater than the first ideal value, then set the maximum number of data blocks allowed to be sent as the first ideal value.

7. The method for controlling data transfer rate according to claim 1, wherein time, in which the retransmission rate detected is consecutively greater than the upper threshold of the retransmission rate, exceeds a upper threshold trigger time, the Radio Link Controller entity instructs the Media Access Control Dedicate to decrease the maximum number of data blocks, which are allowed to be sent in the next scheduling period; and
   if time, in which the retransmission rate detected is consecutively less than the lower threshold of retransmission rate, exceeds a lower threshold trigger time, the Radio Link Controller entity instructs the Media Access Control Dedicate to increase the maximum number of data blocks, which are allowed to be sent in the next scheduling period of the High Speed Downlink Packet Access service.

8. The method for controlling data transfer rate according to claim 1, wherein:

   when the retransmission rate detected is greater than the upper threshold of the retransmission rate, if only one schedulable nonzero transmission format exists in the transmission format set of the Media Access Control Dedicate currently, then the Radio Link Controller entity decreases the size of a current sending window; otherwise, the Radio Link Controller entity instructs the Media Access Control Dedicate to limit the use of a transmission format, which has the maximum rate in a nonzero-rate transmission format set which is schedulable currently;
   when the retransmission rate detected is less than the lower threshold of retransmission rate, if the size of the current sending window of the Radio Link Controller entity is less than a maximum value configured initially, then the Radio Link Controller entity increases the size of its current sending window; otherwise, the Radio Link Controller entity instructs the Media Access Control Dedicate to restore the use of a transmission format, which has the minimum rate in the limited transmission formats.

9. The method for controlling data transfer rate according to claim 8, wherein:

   the maximum value configured initially is $1/2^n$ of a second ideal value, wherein n is an integer which is equal to or larger than 0, and the minimum of the maximum value configured initially is 1; wherein, the second ideal value is the number of data blocks transferred in the response loopback delay;

the size of the sending window is decreased according to the sequence of the second ideal value, or restored according to the inverted sequence of the second ideal value.

10. The method for controlling data transfer rate according to claim 1, wherein if the time, in which the retransmission rate detected is consecutively greater than the upper threshold of the retransmission rate, exceeds the upper threshold trigger time, the Media Access Control Dedicate limits the use of a transmission format, which has the maximum rate in a nonzero-rate transmission format set which is schedulable currently, or decreases the size of the sending window of the Radio Link Controller entity; If the time, in which the retransmission rate detected is consecutively less than the lower threshold of retransmission rate, exceeds the lower threshold trigger time, the size of the sending window of the entity is increased, or the use of a transmission format with the minimum rate in the limited transmission formats of the Media Access Control Dedicate is restored.

11. A system for controlling data transfer rate, comprising:

a Radio Link Controller entity, for detecting a retransmission rate of data blocks and outputting the detected retransmission rate;
a Media Access Control Dedicate ;and
a control device, for instructing the Media Access Control Dedicate to control the data transfer rate according to the detected retransmission rate;
wherein
the Radio Link Controller entity comprises: a detecting means, for detecting the retransmission rate of data blocks; and a comparing means, for comparing the retransmission rate detected with a preset retransmission rate threshold, or comparing the time, in which the retransmission rate is consecutively greater than the upper threshold of the retransmission rate, with the upper threshold trigger time, and outputting a comparing result, wherein the comparison means is connected with the detecting means;
the control device comprises: a first control means, for issuing instructions to change the maximum number of data blocks, which are allowed to be sent in the next scheduling period of the High Speed Downlink Packet Access service by the Media Access Control Dedicate, according to the comparison result; and an adjusting means for adjusting the maximum number of data blocks; or
the control device comprises: a second control means, for issuing instructions to limit or restore the use of a transmission format, which has the maximum rate in the schedulable nonzero-rate transmission format set of the current Media Access Control Dedicate, according to the comparison result from the comparing means; and
a transmission format adjusting means, for limiting the use of a transmission format, which has the maximum rate in a nonzero-rate transmission format set which is schedulable currently in the Media Access Control Dedicate, or for.restoring the use of a transmission format, which has the minimum rate in the limited transmission formats in the Media Access Control Dedicate, according to instructions from the second control means.

12. The system for controlling data transfer rate according to claim 11, wherein the detecting means further comprises:

a detection parameter setting unit, for setting detection parameters of the Radio Link Controller entity and setting up the entity.

13. The system for controlling data transfer rate according to claim 12, wherein the detection parameters include any one or more of the following:

initiation delay time of retransmission rate detection, retransmission rate detection period, upper threshold trigger time, delay time after the upper threshold event is triggered, lower threshold trigger time, delay time after the lower threshold event is triggered, falling step size of data block number, rising step size of data block number, and the upper threshold of the retransmission rate, the lower threshold of retransmission rate, and response loop back delay.

14. The system for controlling data transfer rate according to claim 11, wherein the control means further comprises a sending window adjusting means, for correspondingly adjusting size of the sending window of the Radio Link Controller entity according to the instructions from the second control means.

**Patentansprüche**

1. Verfahren zum Steuern einer Datenübertragungsrate, das Folgendes umfasst:

Detektieren einer Übertragungswiederholungsrate von Datenblöcken durch eine Funkverbindungssteuerungs-Entität (Radio Link Controller entity, RLC-Entität);
Ausgeben der detektierten Übertragungswiederholungsrate;

Anweisen einer dedizierten Medienzugangssteuerung (Media Access Control Dedicate, MAC-d), die Datenübertragungsrate gemäß der detektierten Übertragungswiederholungsrate zu steuern;
wobei dann, wenn die detektierte Übertragungswiederholungsrate größer ist als ein voreingestellter oberer Schwellenwert der Übertragungswiederholungsrate, die Funkverbindungssteuerungs-Entität die dedizierte Medienzugangssteuerung anweist, die maximale Anzahl von Datenblöcken, die in einer nächsten Planungsperiode eines Hochgeschwindigkeitsabwärtsstreckenpaketzugangsdienstes (High Speed Downlink Packet Access service, HSDPA-Dienst) gesendet werden dürfen, zu verringern, oder die Funkverbindungssteuerungs-Entität die dedizierte Medienzugangssteuerung anweist, die Nutzung eines Übertragungsformats, das die maximale Rate in einer aktuell planbaren Nichtnullraten-Übertragungsformatgruppe aufweist, einzuschränken;
dann, wenn die detektierte Übertragungswiederholungsrate kleiner ist als ein voreingestellter unterer Schwellenwert der Übertragungswiederholungsrate, die Funkverbindungssteuerungs-Entität die dedizierte Medienzugangssteuerung anweist, die maximale Anzahl von Datenblöcken, die in der nächsten Planungsperiode eines Hochgeschwindigkeitsabwärtsstreckenpaketzugangsdienstes gesendet werden dürfen, zu erhöhen, oder die Funkverbindungssteuerungs-Entität die dedizierte Medienzugangssteuerung anweist, die Nutzung eines Übertragungsformats, das die minimale Rate in den eingeschränkten Übertragungsformaten aufweist, wiederherzustellen.

2. Verfahren zum Steuern der Datenübertragungsrate nach Anspruch 1, das ferner vor dem Ausführen des Detektionsschrittes die folgende Prozedur umfasst:
die dedizierte Medienzugangssteuerung initialisiert die maximale Anzahl von Datenblöcken, die in einer Planungsperiode des Hochgeschwindigkeitsabwärtsstreckenpaketzugangsdienstes gesendet werden dürfen, auf einen ersten idealen Wert, wobei der erste ideale Wert die maximale Anzahl von Datenblöcken ist, die in einem Sendezeitplanungsintervall (Transmission Timing Interval, TTI), das gemäß der Kapazitätszuweisung eines Node B bestimmt wird, gesendet werden dürfen.

3. Verfahren zum Steuern der Datenübertragungsrate nach Anspruch 2, das ferner vor dem Ausführen des Detektionsschrittes den folgenden Schritt umfasst:
Einstellen von Detektionsparametern für die Funkverbindungssteuerungs-Entität und Bilden der Funkverbindungssteuerungs-Entität.

4. Verfahren zum Steuern der Datenübertragungsrate nach Anspruch 3, wobei die Detektionsparameter eines oder mehrere des Folgenden enthalten:

Startverzögerungszeit der Übertragungswiederholungsratendetektion, Übertragungswiederholungsratendetektionsperiode, oberer Auslösezeitschwellenwert, Verzögerungszeit nachdem das obere Schwellenwertereignis ausgelöst wurde, unterer Auslösezeitschwellenwert, Verzögerungszeit nachdem das untere Schwellenwertereignis ausgelöst wurde, abfallende Schrittgröße der Datenblocknummer, ansteigende Schrittgröße der Datenblocknummer und der obere Schwellenwert der Übertragungswiederholungsrate, der untere - Schwellenwert der Übertragungswiederholungsrate und außerdem Antwortrückführungsverzögerung.

5. Verfahren zum Steuern der Datenübertragungsrate nach Anspruch 1, wobei das Verfahren zum Verringern oder Erhöhen der maximalen Anzahl Folgendes enthält:

Verringern der maximalen Anzahl von Datenblöcken, die in der nächsten Planungsperiode des Hochgeschwindigkeitsabwärtsstreckenpaketzugangsdienstes gesendet werden dürfen, um die abfallende Schrittgröße der Datenblocknummer;
oder
Erhöhen der maximalen Anzahl von Datenblöcken, die in der nächsten Planungsperiode des Hochgeschwindigkeitsabwärtsstreckenpaketzugangsdienstes gesendet werden dürfen, um die ansteigende Schrittgröße der Datenblocknummer.

6. Verfahren zum Steuern der Datenübertragungsrate nach Anspruch 2, wobei die maximale Anzahl von Datenblöcken, die in der Planungsperiode des Hochgeschwindigkeitsabwärtsstreckenpaketzugangsdienstes durch die dedizierte Medienzugangssteuerung gesendet werden dürfen, größer oder gleich Null ist und kleiner als oder gleich dem ersten Idealwert ist;
falls die maximale Anzahl von Datenblöcken, die gesendet werden dürfen, nach dem Verringern kleiner als Null ist, Einstellen der maximalen Anzahl als Null;
falls die maximale Anzahl von Datenblöcken, die gesendet werden dürfen, nach dem Erhöhen größer ist als der erste Idealwert, dann Einstellen der maximalen Anzahl von Datenblöcken, die gesendet werden dürfen, als den ersten Idealwert.

**7.** Verfahren zum Steuern der Datenübertragungsrate nach Anspruch 1, wobei dann, wenn die Zeit, in der detektiert wird, dass die Übertragungswiederholungsrate fortlaufend größer ist als der obere Schwellenwert der Übertragungswiederholungsrate, einen oberen Auslösezeitschwellenwert überschreitet, die Funkverbindungssteuerungs-Entität die dedizierte Medienzugangssteuerung anweist, die maximale Anzahl von Datenblöcken, die in der nächsten Planungsperiode gesendet werden dürfen, zu verringern; und
dann, wenn die Zeit, in der detektiert wird, dass die Übertragungswiederholungsrate fortlaufend kleiner ist als der untere Schwellenwert der Übertragungswiederholungsrate, einen unteren Auslösezeitschwellenwert überschreitet, die Funkverbindungssteuerungs-Entität die dedizierte Medienzugangssteuerung anweist, die maximale Anzahl von Datenblöcken, die in der nächsten Planungsperiode des Hochgeschwindigkeitsabwärtsstreckenpaketzugangsdienstes gesendet werden dürfen, zu erhöhen.

**8.** Verfahren zum Steuern der Datenübertragungsrate nach Anspruch 1, wobei:

wenn detektiert wird, dass die Übertragungswiederholungsrate größer ist als der obere Schwellenwert der Übertragungswiederholungsrate, falls aktuell nur ein planbares Nichtnull-Übertragungsformat in der Übertragungsformatgruppe der dedizierten Medienzugangssteuerung vorhanden ist, dann die Funkverbindungssteuerungs-Entität die Größe eines aktuellen Sendefensters verringert; und andernfalls die Funkverbindungssteuerungs-Entität die dedizierte Medienzugangssteuerung anweist, die Nutzung eines Übertragungsformats, das die maximale Rate in einer aktuell planbaren Nichtnullraten-Übertragungsformatgruppe aufweist, einzuschränken;
wenn detektiert wird, dass die Übertragungswiederholungsrate kleiner ist als der untere Schwellenwert der Übertragungswiederholungsrate, falls die Größe des aktuellen Sendefensters der Funkverbindungssteuerungs-Entität kleiner ist als ein anfangs konfigurierter maximaler Wert, dann die Funkverbindungssteuerungs-Entität die Größe ihres aktuellen Sendefensters erhöht; und andernfalls die Funkverbindungssteuerungs-Entität die dedizierte Medienzugangssteuerung anweist, die Nutzung eines Übertragungsformats, das die minimale Rate aus den beschränkten Übertragungsformaten aufweist, wiederherzustellen.

**9.** Verfahren zum Steuern der Datenübertragungsrate nach Anspruch 8, wobei:

der anfänglich konfigurierte maximale Wert $1/2^n$ eines zweiten Idealwerts ist, wobei n eine Ganzzahl ist, die gleich oder größer als 0 ist, und das Minimum des anfänglich konfigurierten maximalen Werts 1 ist; wobei der zweite Idealwert die Anzahl von Datenblöcken ist, die in der Antwortrückführungsverzögerung übertragen werden;
die Größe des Sendefensters gemäß der Folge des zweiten Idealwerts verringert wird oder gemäß der umgekehrten Reihenfolge des zweiten Idealwerts wiederhergestellt wird.

**10.** Verfahren zum Steuern der Datenübertragungsrate nach Anspruch 1, wobei dann, wenn die Zeit, in der detektiert wird, dass die Übertragungswiederholungsrate fortlaufend größer ist als der obere Schwellenwert der Übertragungswiederholungsrate, den oberen Auslösezeitschwellenwert überschreitet, die dedizierte Medienzugangssteuerung die Nutzung eines Übertragungsformats, das die maximale Rate in einer aktuell planbaren Nichtnullraten-Übertragungsformatgruppe aufweist, einschränkt oder die Größe des Sendefensters der Funkverbindungssteuerungs-Entität verringert;
falls die Zeit, in der detektiert wird, dass die Übertragungswiederholungsrate fortlaufend kleiner ist als der untere Schwellenwert der Übertragungswiederholungsrate, den unteren Auslösezeitschwellenwert übersteigt, die Größe des Sendefensters der Entität erhöht wird oder die Nutzung eines Übertragungsformats mit der minimalen Rate in den eingeschränkten Übertragungsformaten der dedizierten Medienzugangssteuerung wiederhergestellt wird.

**11.** System zum Steuern einer Datenübertragungsrate, das Folgendes umfasst:

eine Funkverbindungssteuerungs-Entität zum Detektieren einer Übertragungswiederholungsrate von Datenblöcken und Ausgeben der detektierten Übertragungswiederholungsrate;
eine dedizierte Medienzugangssteuerung; und
eine Steuervorrichtung zum Anweisen der dedizierten Medienzugangssteuerung, die Datenübertragungsrate gemäß der detektierten Übertragungswiederholungsrate zu steuern;
wobei
die Funkverbindungssteuerungs-Entität Folgendes umfasst: ein Detektionsmittel zum Detektieren der Übertragungswiederholungsrate von Datenblöcken; und ein Vergleichsmittel zum Vergleichen der detektierten Übertragungswiederholungsrate mit einem voreingestellten Übertragungswiederholungsratenschwellenwert oder zum Vergleichen der Zeit, in der die Übertragungswiederholungsrate fortlaufend größer ist als der obere Schwellenwert der Übertragungswiederholungsrate, mit einem oberen Auslösezeitschwellenwert, und zum Ausgeben eines Vergleichsergebnisses, wobei das Vergleichsmittel mit dem Detektionsmittel verbunden ist;

die Steuervorrichtung Folgendes umfasst: ein erstes Steuermittelmittel zum Ausgeben von Anweisungen, die maximale Anzahl von Datenblöcken zu ändern, die in der nächsten Planungsperiode des Hochgeschwindigkeitsabwärtsstreckenpaketzugangsdienstes durch die dedizierte Medienzugangssteuerung gesendet werden dürfen, gemäß dem Vergleichsergebnis;

und ein Anpassungsmittel zum Anpassen der maximalen Anzahl von Datenblöcken; oder die Steuervorrichtung Folgendes umfasst: ein zweites Steuermittel zum Ausgeben von Anweisungen, die Nutzung eines Übertragungsformats, das die maximale Rate in der planbaren Nichtnullraten-Übertragungsformatgruppe der aktuellen dedizierten Medienzugangssteuerung aufweist, gemäß dem Vergleichsergebnis aus dem Vergleichsmittel einzuschränken oder wiederherzustellen; und ein Übertragungsformatanpassungsmittel zum Einschränken der Nutzung eines Übertragungsformats, das die maximale Rate in einer Nichtnullraten-Übertragungsformatgruppe, die aktuell planbar ist, in der dedizierten Medienzugangssteuerung aufweist, oder zum Wiederherstellen der Nutzung eines Übertragungsformats, das die minimale Rate in den eingeschränkten Übertragungsformaten in der dedizierten Medienzugangssteuerung aufweist, gemäß Anweisungen aus dem zweiten Steuermittel.

12. System zum Steuern der Datenübertragungsrate nach Anspruch 11, wobei das Detektionsmittel ferner Folgendes umfasst:

eine Detektionsparametereinstelleinheit zum Einstellen von Detektionsparametern der Funkverbindungssteuerungs-Entität und Einrichten der Entität.

13. System zum Steuern der Datenübertragungsrate nach Anspruch 12, wobei die Detektionsparameter eines oder mehrere des Folgenden enthalten:

Startverzögerungszeit der Übertragungswiederholungsratendetektion, Übertragungswiederholungsratendetektionsperiode, oberer Auslösezeitschwellenwert, Verzögerungszeit nachdem das obere Schwellenwertereignis ausgelöst wurde, unterer Auslösezeitschwellenwert, Verzögerungszeit nachdem das untere Schwellenwertereignis ausgelöst wurde, abfallende Schrittgröße der Datenblocknummer, ansteigende Schrittgröße der Datenblocknummer und der obere Schwellenwert der Übertragungswiederholungsrate, der untere Schwellenwert der Übertragungswiederholungsrate und Antwortrückführungsverzögerung.

14. System zum Steuern der Datenübertragungsrate nach Anspruch 11, wobei das Steuermittel ferner ein Sendefensteranpassungsmittel zum entsprechenden Anpassen der Größe des Sendefensters der Funkverbindungssteuerungs-Entität gemäß den Anweisungen aus dem zweiten Steuermittel umfasst.

## Revendications

1. Procédé de commande du débit de transfert de données, comprenant :

la détection d'un débit de retransmission de blocs de données par une entité de Contrôleur de Liaison Radio (RLC, Radio Link Controler) ;
la fourniture en sortie du débit de retransmission détecté ;
le fait d'ordonner à un système Dédié de Contrôle d'Accès au Support (MAC-d, Media Access Control Dedicate) de commander le débit de transfert de données conformément au débit de retransmission détecté ;
dans lequel, si le débit de retransmission détecté est supérieur à un seuil supérieur préréglé du débit de retransmission, l'entité de Contrôleur de Liaison Radio ordonne au système Dédié de Contrôle d'Accès au Support de réduire le nombre maximum de blocs de données dont l'envoi est autorisé lors d'une période de planification suivante d'un service d'Accès par Paquets Descendants à Haut Débit (HSDPA, High Speed Downlink Packet Access), ou l'entité de Contrôleur de Liaison Radio ordonne au système Dédié de Contrôle d'Accès au Support de limiter l'utilisation d'un format de transmission qui contient un débit maximum dans un ensemble de formats de transmission à débit non nul qui peut être planifié à l'instant courant ;
si le débit de retransmission détecté est inférieur à un seuil inférieur préréglé du débit de retransmission, l'entité de Contrôleur de Liaison Radio ordonne au système Dédié de Contrôle d'Accès au Support d'augmenter le nombre maximum de blocs de données dont l'envoi est autorisé lors de la période de planification suivante d'un service d'Accès par Paquets Descendants à Haut Débit ou l'entité de Contrôleur de Liaison Radio ordonne au système Dédié de Contrôle d'Accès au Support de rétablir l'utilisation d'un format de transmission qui contient le débit minimum parmi les formats de transmission limités.

2. Procédé de commande du débit de transfert de données selon la revendication 1, comprenant en outre la procédure suivante avant d'effectuer l'étape de détection :

l'initialisation par le système Dédié de Contrôle d'Accès au Support du nombre maximum de blocs de données dont l'envoi est autorisé lors d'une période de planification du service d'Accès par Paquets Descendants à Haut Débit à une première valeur idéale, la première valeur idéale étant le nombre maximum de blocs de données dont l'envoi est autorisé lors d'un Intervalle de Cadencement de Transmission (TTI, Transmission Timing Interval) déterminé conformément à l'Allocation de Capacité d'un Noeud B.

3. Procédé de commande du débit de transfert de données selon la revendication 2, comprenant en outre l'étape suivante, avant d'effectuer l'étape de détection : le réglage de paramètres de détection pour l'entité de Contrôleur de Liaison Radio et la constitution de l'entité de Contrôleur de Liaison Radio.

4. Procédé de commande du débit de transfert de données selon la revendication 3, dans lequel les paramètres de détection comprennent l'un quelconque ou plusieurs des suivants :

le temps de retard du début de la détection du débit de retransmission, la période de détection du débit de retransmission, le temps de déclenchement de seuil supérieur, le temps de retard après que l'événement de seuil supérieur a été déclenché, le temps de déclenchement de seuil inférieur, le temps de retard après que l'événement de seuil inférieur a été déclenché, la taille du pas d'abaissement du nombre de blocs de données, la taille du pas d'augmentation du nombre de blocs de données, et le seuil supérieur du débit de retransmission, le seuil inférieur du débit de retransmission ainsi que le retard de bouclage de réponse.

5. Procédé de commande du débit de transfert de données selon la revendication 1, dans lequel le procédé de réduction ou d'augmentation du nombre maximum comprend :

la réduction du nombre maximum de blocs de données dont l'envoi est autorisé lors de la période de planification suivante du service d'Accès par Paquets Descendants à Haut Débit, de la taille du pas d'abaissement du nombre de blocs de données ; ou
l'augmentation du nombre maximum de blocs de données dont l'envoi est autorisé lors de la période de planification suivante du service d'Accès par Paquets Descendants à Haut Débit, de la taille du pas d'augmentation du nombre de blocs de données.

6. Procédé de commande du débit de transfert de données selon la revendication 2, dans lequel le nombre maximum de blocs de données dont l'envoi est autorisé lors de la période de planification du service d'Accès par Paquets Descendants à Haut Débit par le système Dédié de Contrôle d'Accès au Support, est supérieur ou égal à zéro et est inférieur ou égal à la première valeur idéale ;
si le nombre maximum de blocs de données dont l'envoi est autorisé après la diminution est inférieur à zéro, on règle le nombre maximum à zéro ;
si le nombre maximum de blocs de données dont l'envoi est autorisé après l'augmentation est supérieur à la première valeur idéale, on règle alors le nombre maximum de blocs de données dont l'envoi est autorisé à la première valeur idéale.

7. Procédé de commande du débit de transfert de données selon la revendication 1, dans lequel si le temps pendant lequel le débit de retransmission détecté est consécutivement supérieur au seuil supérieur du débit de retransmission, dépasse un temps de déclenchement de seuil supérieur, l'entité de Contrôleur de Liaison Radio ordonne au système Dédié de Contrôle d'Accès au Support de réduire le nombre maximum de blocs de données dont l'envoi est autorisé lors de la période de planification suivante ; et
si le temps pendant lequel le débit de retransmission détecté est consécutivement inférieur au seuil inférieur du débit de retransmission, dépasse un temps de déclenchement de seuil inférieur, l'entité de Contrôleur de Liaison Radio ordonne au système Dédié de Contrôle d'Accès au Support d'augmenter le nombre maximum de blocs de données dont l'envoi est autorisé lors de la période de planification suivante du service d'Accès par Paquets Descendants à Haut Débit.

8. Procédé de commande du débit de transfert de données selon la revendication 1, dans lequel :

lorsque le débit de retransmission détecté est supérieur au seuil supérieur du débit de retransmission, s'il existe un seul format de transmission non nul pouvant être planifié dans l'ensemble de formats de transmission du système Dédié de Contrôle d'Accès au Support à l'instant courant, l'entité de Contrôleur de Liaison Radio réduit alors la taille d'une fenêtre d'envoi courante ; dans le cas contraire, l'entité de Contrôleur de Liaison Radio ordonne au système Dédié de Contrôle d'Accès au Support de limiter l'utilisation d'un format de transmission qui contient le débit maximum dans un ensemble de formats de transmission à débit non nul qui peut être planifié à l'instant courant ;

lorsque le débit de retransmission détecté est inférieur au seuil inférieur du débit de retransmission, si la taille de la fenêtre d'envoi courante de l'entité de Contrôleur de Liaison Radio est inférieure à une valeur maximum initialement configurée, l'entité de Contrôleur de Liaison Radio augmente alors la taille de sa fenêtre d'envoi courante ; dans le cas contraire, l'entité de Contrôleur de Liaison Radio ordonne au système Dédié de Contrôle d'Accès au Support de rétablir l'utilisation d'un format de transmission qui contient le débit minimum parmi les formats de transmission limités.

9. Procédé de commande du débit de transfert de données selon la revendication 8, dans lequel :

la valeur maximum initialement configurée est égale à $1/2^n$ d'une seconde valeur idéale, où n est un entier supérieur ou égal à 0, et le minimum de la valeur maximum initialement configurée est égal à 1 ; dans lequel la seconde valeur idéale est le nombre de blocs de données transférés pendant le retard de bouclage de réponse ;
la taille de la fenêtre d'envoi est réduite conformément à la séquence de la seconde valeur idéale, ou est rétablie conformément à la séquence inversée de la seconde valeur idéale.

10. Procédé de commande du débit de transfert de données selon la revendication 1, dans lequel, si le temps pendant lequel le débit de retransmission détecté est consécutivement supérieur au seuil supérieur du débit de retransmission, dépasse le temps de déclenchement de seuil supérieur, le système Dédié de Contrôle d'Accès au Support limite l'utilisation d'un format de transmission qui contient le débit maximum dans un ensemble de formats de transmission à débit non nul pouvant être planifié à l'instant courant, ou réduit la taille de la fenêtre d'envoi de l'entité de Contrôleur de Liaison Radio ;
si le temps pendant lequel le débit de retransmission détecté est consécutivement inférieur au seuil inférieur du débit de retransmission, dépasse le temps de déclenchement de seuil inférieur, la taille de la fenêtre d'envoi de l'entité est augmentée, ou l'utilisation d'un format de transmission contenant le débit minimum dans les formats de transmission limités du système Dédié de Contrôle d'Accès au Support est rétabli.

11. Système de commande du débit de transfert de données, comprenant :

une entité de Contrôleur de Liaison Radio destinée à détecter un débit de retransmission de blocs de données et à fournir en sortie le débit de retransmission détecté ;
un système Dédié de Contrôle d'Accès au Support ; et
un dispositif de commande destiné à ordonner au système Dédié de Contrôle d'Accès au Support de commander le débit de transfert de données conformément au débit de retransmission détecté ;
dans lequel
l'entité de Contrôleur de Liaison Radio comprend : un moyen de détection destiné à détecter le débit de retransmission de blocs de données ; et un moyen de comparaison destiné à comparer le débit de retransmission détecté à un seuil de débit de retransmission préréglé, ou à comparer le temps pendant lequel le débit de retransmission est consécutivement supérieur au seuil supérieur du débit de retransmission, au temps de déclenchement de seuil supérieur, et à fournir en sortie un résultat de comparaison, dans lequel le moyen de comparaison est connecté au moyen de détection ;
le dispositif de commande comprend : un premier moyen de commande destiné à émettre des instructions de modification du nombre maximum de blocs de données dont l'envoi est autorisé lors de la période de planification suivante du service d'Accès par Paquets Descendants à Haut Débit par le système Dédié de Contrôle d'Accès au Support, conformément au résultat de la comparaison ; et un moyen d'ajustement destiné à ajuster le nombre maximum de blocs de données ; ou
le dispositif de commande comprend : un second moyen de commande destiné à émettre des instructions pour limiter ou rétablir l'utilisation d'un format de transmission qui contient le débit maximum dans l'ensemble de formats de transmission à débit non nul pouvant être planifié du système Dédié de Contrôle d'Accès au Support courant, conformément au résultat de la comparaison provenant du moyen de comparaison ; et un moyen d'ajustement du format de transmission destiné à limiter l'utilisation d'un format de transmission qui contient le débit maximum dans un ensemble de formats de transmission à débit non nul qui peut être planifié à l'instant courant dans le système Dédié de Contrôle d'Accès au Support, ou à rétablir l'utilisation d'un format de transmission qui contient le débit minimum parmi les formats de transmission limités dans le système Dédié de Contrôle d'Accès au Support, conformément à des instructions provenant du second moyen de commande.

12. Système de commande du débit de transfert de données selon la revendication 11, dans lequel le moyen de détection comprend en outre :

une unité de réglage de paramètres de détection, destinée à régler des paramètres de détection de l'entité de Contrôleur de Liaison Radio et à configurer l'entité.

13. Système de commande du débit de transfert de données selon la revendication 12, dans lequel les paramètres de détection comprennent un ou plusieurs des suivants :

un temps de retard d'initialisation de la détection du débit de retransmission, une période de détection du débit de retransmission, un temps de déclenchement de seuil supérieur, un temps de retard après que l'événement de seuil supérieur a été déclenché, un temps de déclenchement de seuil inférieur, un temps de retard après que l'événement de seuil inférieur a été déclenché, une taille du pas d'abaissement du nombre de blocs de données, une taille du pas d'augmentation du nombre de blocs de données, et le seuil supérieur du débit de retransmission, le seuil inférieur du débit de retransmission et le retard de bouclage de réponse.

14. Système de commande du débit de transfert de données selon la revendication 11, dans lequel le moyen de commande comprend en outre un moyen d'ajustement d'une fenêtre d'envoi destiné à ajuster de manière correspondante la taille de la fenêtre d'envoi de l'entité de Contrôleur de Liaison Radio conformément aux instructions provenant du second moyen de commande.

Fig.1

Fig.2

| Spare Bits 7-4 | · | CmCH-PI |
|---|---|---|
| Maximum MAC-d PDU Length | | |
| Maximum MAC-d PDU Length (Content) | | HS-DSCH Credits |
| HS-DSCH Credits (Content) | | |
| HS-DSCH Interval | | |
| HS-DSCH Repetition Period | | |
| Spare Extension | | |

Fig.3

An RLC entity detects the retransmission rate of data blocks  ⟩ 401

An MAC-d is instructed to control the data transfer rate according to the detection result  ⟩ 402

Fig.4

Start

RRC sets detection
parameters for RLC. and
an MAC-d initializes

501

502

RLC entity detects the
retransmission rate

RLC entity
determines the magnitude of the
retransmission rate

503

1. The retransmission rate is
consecutively greater than
the upper threshold of
retransmission rate in the
upper threshold trigger time

2. The retransmission rate is
consecutively less than the
lower threshold of
retransmission rate in the
lower threshold trigger time

504

MAC-d decreases the
maximum number of data
blocks allowed to be sent
by a falling step size of
data block number

3. In other situations

507

MAC-d increases the maximum
number of data blocks allowed
to be sent by a rising step size
of data block number

505

Whether the
maximum number of data
blocks allowed to be sent
is less than 0

no

508

Whether the
maximum number of data
blocks allowed to be sent is
greater than the first
ideal value

no

yes

506

MAC-d sets the maximum
number of data blocks
allowed to be sent as 0

yes

509

MAC-d sets the
maximum number of data
blocks allowed to be sent
as the first ideal value

Fig.5

Start  601

Set up an RLC entity

602

Detect the retransmission rate

603

Determine the magnitude of the retransmission rate

1. The retransmission rate is consecutively greater than the upper threshold of retransmission rate in the upper threshold trigger time

2. The retransmission rate is consecutively less than the lower threshold of retransmission rate in the lower threshold trigger time

604

Whether only one schedulable nonzero TF exists in the current MAC-d

yes

607

Whether the size of the sending window of the current RLC is in its maximum value configured Initially

no

605

Decrease the size of the sending window of the RLC

no

606

Limit the use of a TF with the maximum rate in the MAC-d

3. In other situations

yes

608

Restore the use of a TF with the minimum rate limited in the MAC-d

609

Increase the size of the sending window of the RLC

Fig.6

ACK1  ACK2  ACK3  ACK4  ACK5  ACK6                    T

PKT1  PKT2  PKT3  PKT4  PKT5  PKT6                    S

Fig.7

81

## Detecting And Determining Device

### Detection Parameter Setting Unit
813

### Detecting Means
811

### Comparing Means
812

82

## Control Device

### First Control Means
821

### Data Block Adjusting Means
822

### Second Control Means
823

### Sending Window Adjusting Means
825

### Transmission Format Adjusting Means
824

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200610024031
- CN 200610024172
- US 2005073989 A1
- US 2003043777 A1